Europäisches Patentamt

European Patent Office

Office européen des brevets

(19)

(11) Numéro de publication : **0 091 529 B1**

(12) **FASCICULE DE BREVET EUROPÉEN**

(45) Date de publication du fascicule du brevet :
10.09.86

(21) Numéro de dépôt : 82401373.4

(22) Date de dépôt : 23.07.82

(51) Int. Cl.⁴ : **D 21 J 1/16**, D 21 J 1/20, E 04 C 2/16, B 09 B 3/00

(54) **Nouveaux produits pour les revêtements, pour l'isolation et pour l'emballage, à base de déchets industriels et notamment de boues de papeterie et procédé pour leur obtention.**

(30) Priorité : 09.04.82 FR 8206255

(43) Date de publication de la demande :
19.10.83 Bulletin 83/42

(45) Mention de la délivrance du brevet :
10.09.86 Bulletin 86/37

(84) Etats contractants désignés :
AT BE CH DE FR GB IT LI LU NL SE

(56) Documents cités :
FR-A- 2 002 780
FR-A- 2 081 899
FR-A- 2 146 883
FR-A- 2 156 048
FR-A- 2 410 084
GB-A- 1 275 042

(73) Titulaire : **PAPETERIES DE JEAND'HEURS**
**Lisle-en-Rigault**
**F-55000 Bar le Duc (FR)**

(72) Inventeur : **Bartelloni, René**
**Rue Saint-Jean Lisle-en-Rigault**
**F-55000 Bar-le-Duc (FR)**

(74) Mandataire : **Bouju, André**
**Cabinet Bouju 38 avenue de la Grande Armée**
**F-75017 Paris (FR)**

Jouve, 18, rue St-Denis, 75001 Paris, France

## Description

La présente invention est relative à de nouveaux produits à applications multiples telles que la construction et le revêtement (de sols, de murs, etc.), l'isolation (thermique, phonique) et l'emballage sous toutes ses formes. Elle est également relative à un procédé pour l'obtention de tels produits.

La nécessité économique impérieuse de valoriser au maximum tous les déchets (industriels et agricoles) d'une part, et la lutte contre la pollution et la dégradation du milieu naturel d'autre part, ont conduit la demanderesse, spécialisée dans le domaine de la papeterie, à rechercher des moyens de récupération et de revalorisation des boues de papeterie.

On connaît selon les documents FR-A-2 146 883 et GB-A-1 275 042 des produits souples, pour la construction, l'isolation ou l'emballage, comprenant des boues de papeteries, une résine et des charges minérales ou organiques. Ces produits sont réalisés en ajoutant au mélange de boues de papeteries contenant des fibres, de résine et de charges, un agent de précipitation tel que l'alun. Ces produits ne présentent pas une grande résistance mécanique, en raison de l'absence de fortes liaisons mécaniques entre la résine et les fibres de boues de papeteries.

Le but de la présente invention est d'améliorer la résistance mécanique de ces produits à base de boues de papeterie.

Suivant l'invention, les produits souples pour la construction, le revêtement, l'isolation ou l'emballage, comprenant des boues de papeteries, une résine et des charges minérales ou organiques, sont caractérisés en ce qu'ils sont constitués :

— de boues de papeterie provenant de bassins et décantation dans la proportion comprise entre 10 et 92 %,

— du latex (naturel ou synthétique) dans la proportion comprise entre 3 et 75 %, et

— un agent de réticulation constitué par un condensat de diamide et de formaldéhyde à bas poids moléculaire,

— de charges minérales ou organiques dans la proportion comprise entre 5 et 70 %.

La demanderesse a constaté que l'agent de réticulation précité avait la propriété de créer des liaisons physicochimiques fortes entre les fibres des boues de papeterie et les particules de latex, de sorte que les produits selon l'invention présentent une résistance mécanique nettement améliorée par rapport à ceux de l'état de la technique.

Conformément à l'invention, les charges minérales ou organiques sont prises dans le groupe qui comprend le carbonate de calcium ou de magnésium, le kaolin, le talc, l'oxyde de titane, le gypse, les ocres naturels, les silico-aluminates, l'amiante, les aminoplastes, les phénoplastes, les déchets de cuir, la sciure de bois, les agents de collage, les amidons et les pâtes nobles de papeterie, blanchies ou écrues, classiques ou saisonnières, d'origine végétale à cycle annuel.

Selon un mode de réalisation avantageux de l'objet de l'invention, les produits objets de la présente invention se présentent sous forme de feuilles continues.

Selon un autre mode de réalisation avantageux de l'objet de la présente invention, les produits se présentent sous forme de panneaux.

Selon un autre mode de réalisation avantageux de l'objet de la présente invention, les produits obtenus sont colorés dans leur masse.

La présente invention a également pour objet le procédé de préparation des produits conformes à la présente invention, procédé caractérisé par les étapes suivantes :

a) mise en suspension dans l'eau de boues de papeterie, à un pH voisin de la neutralité et à une concentration comprise entre 15 et 50 g/litre ;

b) addition d'une résine urée-formol (0,01 à 2 %) (addition qui a pour but d'empêcher la dégradation bactérienne) ;

c) première addition d'un agent de réticulation constitué par un condensat de diamide et de formaldéhyde à bas poids moléculaire ;

d) addition du latex : 3 à 75 % et de préférence 30 à 40 % par rapport au poids sec des boues utilisées ;

e) deuxième addition du même agent de réticulation ;

f) addition de la charge minérale et/ou organique ;

g) le mélange ainsi formé est acheminé vers le circuit de fabrication d'une machine à papier.

Selon un mode de réalisation particulièrement avantageux du procédé objet de la présente invention, la polarité de l'agent de réticulation utilisé est de signe contraire à celle du latex, laquelle est identique à celle des boues.

Conformément à l'invention, le poids de l'agent de réticulation ajouté est de 0,01 à 10 %, et de préférence entre 2 et 6 % par rapport au poids sec du latex utilisé pour la première addition et de 0,01 à 5 %, et de préférence entre 1,5 et 3,5 % par rapport au poids du latex pour la seconde addition.

La présente invention vise particulièrement les nouveaux produits pour le revêtement, l'isolation et l'emballage obtenus à partir de déchets industriels, leur procédé de préparation, les moyens propres à la mise en œuvre de ce procédé, ainsi que les procédés d'ensemble et les chaînes de fabrication dans lesquels sont inclus le procédé et les produits conformes à la présente invention.

# 0 091 529

I — Exemples de composition de la matière première de départ

(Les pourcentages sont exprimés en produits secs)

## Exemple 1

| | |
|---|---|
| Boues de papeterie | 12 % |
| Pâte de résineux blanchie | 18 % |
| Sciure de bois fine | 30 % |
| Latex acrylique | 30 % |
| Résine phénolique | 6 % |
| Agent de réticulation | 4 % |

## Exemple 2

| | |
|---|---|
| Boues de papeterie | 10 % |
| Pâte de résineux blanchie | 46 % |
| Déchets de cuir finement râpé | 19 % |
| Latex acrylique | 23 % |
| Agent de réticulation | 2 % |

## Exemple 3

| | |
|---|---|
| Boues de papeterie | 12 % |
| Pâte de résineux écrue | 20 % |
| Déchets de cuir râpé | 16 % |
| Câble nylon, longueur 13 mm | 32 % |
| Latex acrylique | 32 % |
| Agent de réticulation | 4 % |

II — Exemples de préparation

1. Préparation de feuilles continues

On prélève 100 kg de boues sèches de papeterie.

Elles contiennent environ 70 kg de charges minérales (principalement le carbonate de calcium) et environ 30 kg de fibres de cellulose. Ces boues sont mises en suspension dans 5 000 litres d'eau pour avoir une concentration d'environ 20 g/litre. Le pH est ajusté, si besoin est, à 7-7, 2. On ajoute 0,02 % d'une résine urée-formol par rapport au poids sec du mélange. A ce stade, il est possible d'utiliser des colorants synthétiques ou naturels, puis on ajoute 6 % d'un condensat de diamide et de formaldéhyde à bas poids moléculaire par rapport au poids de latex et servant à la réticulation de celui-ci.

On ajoute alors 30 % de latex (par rapport au poids des boues sèches) et ensuite une nouvelle quantité de l'agent de réticulation (3,5 % par rapport au poids de latex sec). Après homogénéisation, on ajoute 5 % (par rapport au poids total boues + latex) d'un agent de collage synthétique (par exemple « AQUAPEL » de HERCULES), puis 0,4 % (toujours par rapport au poids total boues + latex) d'amidon cationique servant d'agent de réticulation pour le produit de collage synthétique.

Le mélange homogénéisé est ensuite acheminé vers les circuits classiques de fabrication d'une machine à papier.

La feuille obtenue a les caractéristiques suivantes :

| | |
|---|---|
| Grammage | 405 g/m$^2$ |
| Indice Müllen | 8,4 |
| % de cendres | 70,2 % |
| Collage encre AFNOR | 5/5 |
| Longueur de rupture | 987 m |
| Latex | 23 % |

2. Préparation de panneaux

La composition finale du mélange était la suivante :

| | |
|---|---|
| Boues de papeterie | 20 parties |
| Cellulose | 30 parties |
| Sciure de bois fine | 50 parties |

3

| | |
|---|---|
| Latex | 50 parties |
| Résine phénolique | 10 parties |

Ce mélange est ensuite pressé entre deux disques d'acier (30 à 40 kg/cm²).

Le séchage final était également effectué sous pression.

Le panneau ainsi obtenu était enduit, avant son utilisation, sur ses deux faces, par une résine plastique (par exemple « AQUAPLAST ») et séchée.

## Revendications

1. Produits souples de teinte naturelle ou colorés pour la construction, le revêtement, l'isolation ou l'emballage, comprenant des boues de papeterie, une résine et des charges minérales ou organiques, caractérisés en ce qu'ils sont constitués :

— de boues de papeterie provenant de bassins de décantation dans la proportion comprise entre 10 et 92 %,

— du latex (naturel ou synthétique) dans la proportion comprise entre 3 et 75 %,

— un agent de réticulation constitué par un condensat de diamide et de formaldéhyde à bas poids moléculaire, et,

— de charges minérales ou organiques dans la proportion comprise entre 5 et 70 %.

2. Produits selon la Revendication 1, caractérisés en ce que les charges minérales ou organiques sont prises dans le groupe qui comprend le carbonate de calcium ou de magnésium, le kaolin, le talc, l'oxyde de titane, le gypse, les ocres naturels, les silico-aluminates, l'amiante, les aminoplastes, les phénoplastes, les déchets de cuir, la sciure de bois, les agents de collage, les amidons et les pâtes nobles de papeterie, blanchies ou écrues classiques ou saisonnières d'origine végétale à cycle annuel.

3. Produits selon l'une quelconque des Revendications 1 ou 2, caractérisés en ce qu'ils se présentent sous forme de feuilles continues.

4. Produits selon l'une quelconque des Revendications 1 ou 2, caractérisés en ce qu'ils se présentent sous forme de panneaux.

5. Produits selon l'une quelconque des Revendications 1 ou 2, caractérisés en ce qu'ils sont colorés dans leur masse.

6. Procédé de préparation des produits selon l'une quelconque des Revendications 1 à 5, caractérisé en ce qu'il comporte les étapes suivantes :

a) mise en suspension dans l'eau de boues de papeterie, à un pH voisin de la neutralité et à une concentration comprise entre 15 et 50 g/litre ;

b) addition d'une résine urée-formol (0,01 à 2 %) (addition qui a pour but d'empêcher la dégradation bactérienne) ;

c) première addition d'un agent de réticulation constitué par un condensat de diamide et de formaldéhyde à bas poids moléculaire ;

d) addition du latex : 3 à 75 % et de préférence 30 à 40 % par rapport au poids sec des boues utilisées ;

e) deuxième addition du même agent de réticulation ;

f) addition de la charge minérale et/ou organique,

g) le mélange pâteux ainsi formé est acheminé vers le circuit de fabrication d'une machine à papier.

7. Procédé selon la Revendication 6, caractérisé en ce que la polarité de l'agent de réticulation utilisé est de signe contraire à celle du latex, laquelle est identique à celle des boues.

8. Procédé selon la Revendication 7, caractérisé en ce que le poids de l'agent de réticulation ajouté est de 0,01 à 10 %, et de préférence entre 2 et 6 %, par rapport au poids sec du latex utilisé pour la première addition et de 0,01 à 5 %, et de préférence entre 1,5 et 3,5 %, par rapport au poids de latex, pour la seconde addition.

9. Procédé selon la Revendication 6, caractérisé en ce que les panneaux façonnés dans les formes, le sont sous une pression comprise entre 30 et 150 kg/cm².

## Claims

1. Flexible natural-shade or coloured products for construction, facing, insulation or packaging, comprising papermaking sludges, a resin and mineral or organic fillers, characterised in that they comprise :

— papermaking sludges from settling tanks in a proportion of between 10 and 92 %,

— latex (natural or synthetic) in a proportion of between 3 and 75 %,

— a cross-linking agent in the form of a condensate of diamide and formaldehyde of low molecular weight and

— mineral or organic fillers in a proportion of between 5 and 70 %.

2. Products according to claim 1, characterised in that the mineral or organic fillers are selected from the group comprising calcium or magnesium carbonate, kaolin, talc, titanium oxide, gypsum, natural ochres, the silico-aluminates, asbestos, aminoplasts, phenoplasts, leather waste, sawdust, gluing agents, starches and high-grade papermaking pulps, bleached or unbleached, conventional or seasonal, of annual-cycle vegetable origin.

3. Products according to claim 1 or 2, characterised in that they are in the form of continuous sheets.

4. Products according to claim 1 or 2, characterised in that they are in the form of panels.

5. Products according to claim 1 or 2, characterised in that they are dyed in the mass.

6. A method of preparing products according to any one of claims 1 to 5, characterised in that it comprises the following steps :

a) suspending in water papermaking sludges of a pH close to neutrality and in a concentration of between 15 and 50 g/litre ;

b) addition of a urea-formaldehyde resin (0.01 to 2 %) (addition intented to prevent bacterial degradation) ;

c) first addition of a cross-linking agent comprising a condensate of diamide and formaldehyde having a low molecular weight ;

d) addition of latex : 3 to 75 % and preferably 30 to 40 % with respect to the dry weight of the sludges used ;

e) second addition of the same cross-linking agent ;

f) addition of the mineral and/or organic filler ;

g) the resulting mixture in paste form is fed to the manufacturing circuit of a papermaking machine.

7. A method according to claim 6, characterised in that the polarity of the cross-linking agent used is of opposite sign to that of the latex, which is identical to that of the sludges.

8. A method according to claim 7, characterised in that the weight of the cross-linking agent added is from 0.01 to 10 %, and preferably between 2 and 6 %, with respect to the dry weight of the latex used for the first addition and from 0.01 to 5 %, and preferably between 1.5 and 3.5 %, with respect to the weight of latex, for the second addition.

9. A method according to claim 6, characterised in that the panels are formed in moulds at a pressure of between 30 and 150 kg/cm$^2$.

## Patentansprüche

1. Elastische naturfarbene oder gefärbte Erzeugnisse für Bau-, Verkleidungs-, Isolierungs- oder Verpackungszwecke, enthaltend Papierfabrikschlämme, ein Harz und mineralische oder organische Füllstoffe, dadurch gekennzeichnet, daß sie bestehen aus :

— Papierfabrikschlämmen, die aus Dekantierbercken stammen, zu einem Anteil von zwischen 10 und 92 %,

— Latex (natürlich oder synthetisch) zu einem Anteil von zwischen 3 und 75 %,

— einem aus einem Diamid-Formaldehyd-Kondensat mit niedrigem Molekulargewicht bestehenden Vernetzungsmittel, und

— mineralischen oder organischen Füllstoffen zu einem Anteil von zwischen 5 und 70 %.

2. Erzeugnisse nach Anspruch 1, dadurch gekennzeichnet, daß die mineralischen oder organischen Füllstoffe aus der aus Calciumcarbonat oder Magnesiumcarbonat, Kaolin, Talk, Titanoxid, Gips, Naturockern, Aluminiumsilicaten, Asbest, Aminoplasten, Phenoplasten, Lederabfällen, Sägemehl, Klebern, Stärken und gebleichten oder ungebleichten aufbereiteten Zellstoffen herkömmlicher Art und aufbereiteten Zellstoffen, die, jahreszeitlich bedingt, von einjährigen Pflanzen stammen, bestehenden Gruppe ausgewählt sind.

3. Erzeugnisse nach Anspruch 1 oder 2, dadurch gekennzeichnet, daß sie bahnförmig vorliegen.

4. Erzeugnisse nach Anspruch 1 oder 2, dadurch gekennzeichnet, daß sie in Form von Platten vorliegen.

5. Erzeugnisse nach Anspruch 1 oder 2, dadurch gekennzeichnet, daß sie in ihrer Masse gefärbt sind.

6. Verfahren zur Herstellung von Erzeugnissen nach einem der Ansprüche 1 bis 5, gekennzeichnet durch die folgenden Verfahrensschritte :

a) Papierfabrikschlämme werden bei nahezu neutralem pH-Wert in einer Konzentration von zwischen 15 und 50 g/l in Wasser suspendiert ;

b) ein Harnstoff-Formaldehyd-Harz (0,01 bis 2 %) wird zugegeben (Zugabe zwecks Verhinderung bakterieller Zersetzung) ;

c) ein aus einem Diamid-Formaldehyd-Kondensat mit niedrigem Molekulargewicht bestehendes Vernetzungsmittel wird erstmals hinzugefügt ;

d) 3 bis 75 % und vorzugsweise 30 bis 40 % Latex, bezogen auf das Trockengewicht der verwendeten Schlämme, werden zugegeben ;

e) das gleiche Vernetzungsmittel wird ein zweites Mal zugegeben ;

f) der mineralische und/oder organische Füllstoff wird hinzugefügt ;

g) das so gebildete pastöse Gemisch wird dem Fabrikationskreislauf einer Papiermaschine zugeführt.

7. Verfahren nach Anspruch 6, dadurch gekennzeichnet, daß die Polarität des verwendeten Vernetzungsmittels von entgegengesetztem Vorzeichen gegenüber derjenigen des Latex ist, welche mit derjenigen des Latex ist, welche mit derjenigen der Schlämme identisch ist.

8. Verfahren nach Anspruch 6, dadurch gekennzeichnet, daß das Gewicht des bei der ersten Zugabe zugefügten Vernetzungsmittels 0,01 bis 10 %, vorzugsweise zwischen 2 und 6 %, bezogen auf das Trockengewicht des verwendeten Latex, und das Gewicht des bei der zweiten Zugabe hinzugefügten Vernetzungsmittels 0,01 bis 5 %, vorzugsweise zwischen 1,5 und 3,5 %, bezogen auf das Gewicht des Latex, beträgt.

9. Verfahren nach Anspruch 6, dadurch gekennzeichnet, daß die Platten unter einem Druck von zwischen 30 und 150 kg/cm² in den Formen geformt werden.

6